# EUROPÄISCHE PATENTSCHRIFT

(11) **EP 1 391 438 B1**
(45) Veröffentlichungstag und Bekanntmachung des Hinweises auf die Patenterteilung: **08.09.2010**
(21) Anmeldenummer: 03016390.1
(22) Anmeldetag: 21.07.2003
(51) Int. Cl.: C03C 10/14

(54) **Bauteil aus einer Lithiumaluminosilikat-Glaskeramik**
Component made of lithium-alumino-silicate glass ceramic
Composant constitué de vitroceramique d'aluminosilicate de lithium

(30) Priorität: 16.08.2002 DE 10238608
(43) Veröffentlichungstag der Anmeldung: 25.02.2004
(73) Patentinhaber: Schott AG, 55122 Mainz (DE)
(72) Erfinder: Döhring, Thorsten, 55128 Mainz (DE); Jedamzik, Ralf, 64347 Griesheim (DE); Esemann, Hauke, 55286 Wörrstadt (DE); Hölzel Eva, 55270 Ober-Olm (DE); Mitra, Ina, 55271 Stadecken-Elsheim (DE)
(74) Vertreter: Gahlert, Stefan

(56) Entgegenhaltungen:
- EP-A- 1 146 018
- DE-A- 1 902 432
- DE-A- 19 939 787
- FR-A- 2 749 579
- GB-A- 2 279 343
- US-A- 3 647 489

## Beschreibung

Die Erfindung betrifft ein Bauteil aus einer Lithiumaluminosilikat-Glaskeramik sowie ein Verfahren zur Herstellung solcher Bauteile.

Die Erfindung betrifft ferner ein Verbundbauteil aus mindestens einem ersten Bauteil aus einer Lithiumaluminosilikat-Glaskeramik und mindestens einem zweiten Bauteil aus einer Metalllegierung mit niedrigem thermischen Ausdehnungskoeffizienten. Die Erfindung betrifft ferner neuartige Verwendungen einer Lithiumaluminosilikat-Glaskeramik.

Von der Anmelderin werden Zerodur®-Glaskeramiken seit Jahren erfolgreich als Präzisionsbauteile für optische und mechanische Anwendungen eingesetzt. Bei der Zerodur®-Glaskeramik handelt es sich um eine Lithiumaluminosilikat-Glaskeramik, die aus einem Ausgangsglas des Systems Li₂O-Al₂O₃-SiO₂ hergestellt wird, wobei durch Zusatz von Keimbildnern wie etwa TiO₂ oder ZrO₂ eine gezielte Kristallisation herbeigeführt wird (vgl. hierzu die DE-A-1 902 432). Aus der US-A-4 851 372 ist ferner eine ähnliche Glaskeramik bekannt, die von der Anmelderin unter der Marke Zerodur-M® vertrieben wird.

Die Herstellung dieser Glaskeramiken erfolgt in verschiedenen Stufen. Nach der Schmelze und Heißformgebung wird das Ausgangsglas üblicherweise unter die Transformationstemperatur abgekühlt. Anschließend wird das Ausgangsglas durch gesteuerte Kristallisation in einen glaskeramischen Artikel überführt. Diese Keramisierung erfolgt in einem mehrstufigen Temperaturprozess, bei dem zunächst durch Keimbildung bei einer Temperatur zwischen meist 600 und 800°C Keime, üblicherweise aus TiO₂- oder ZrO₂/TiO₂-Mischkristallen, erzeugt werden. Auch SnO₂ kann an der Keimbildung beteiligt sein. Bei einer anschließenden Temperaturerhöhung wachsen bei einer Kristallisationstemperatur von etwa 750 bis 900°C Hochquarz-Mischkristalle auf diesen Keimen auf. Hierbei lässt sich der Volumenanteil zwischen der kristallinen Hochquarz-Mischkristallphase und der Glasphase derart steuern, dass sich in einem bestimmten Temperaturbereich annähernd ein Ausdehnungskoeffizient in der Nähe von 0 ergibt. Hierzu wird meist ein Anteil von etwa 80 % und etwa 20 % Restglas angestrebt. Durch die Steuerung des Anteils zwischen der kristallinen Phase aus Hochquarz-Mischkristall und des Restglases lassen sich die Eigenschaften in bestimmten Grenzen anpassen.

Der Anwendungsbereich derartiger Glaskeramiken ist jedoch auf bis zu etwa 600 °C begrenzt, wobei zwischen 130°C und 300°C bereits bestimmte Einschränkungen bestehe.

Darüber hinaus ist es aus der EP-A-1 170 264 bekannt, dass sich Gläser aus dem System Li₂O-Al₂O₃-SiO₂ in Glaskeramiken (LAS-Glaskeramiken) mit Hochquarz-Mischkristallen und/oder Keatit-Mischkristallen als Hauptkristallphasen umwandeln lassen. Wird nach einer Keimbildung im Bereich zwischen etwa 600°C und 800°C eine weitere Temperaturerhöhung im Bereich von ca. 900 bis 1200°C vorgenommen, so wandeln sich zuvor gebildete Hochquarz-Mischkristalle weiter in Keatit-Mischkristalle um (EP-A-1 170 264). Die Umwandlung in Keatit-Mischkristalle ist mit einem Kristallwachstum, d.h. zunehmender Kristallitgröße, verbunden, wodurch zunehmend Lichtstreuung erfolgt, d.h. die Lichttransmission wird zunehmend verringert. Der glaskeramische Artikel erscheint dadurch zunehmend opak. Gemäß der EP-A-1 170 264 erfolgt eine kurzzeitige Temperaturerhöhung auf bis zu 1100°C oder mehr, wodurch sich die Glaskeramik in eine Keramik mit überwiegender Keatit-Mischkristallphase im inneren und mit einer oberflächennah gebildeten Hochquarz-Mischkristallphase umwandelt. Diese Glaskeramiken haben einen Ausdehnungskoeffizienten von kleiner als 1,5 · 10⁻⁶/K.

Formkörper aus einer derartig hergestellten Glaskeramik werden bislang allerdings lediglich als Bauteile in der Massenfertigung verwendet. Sie werden etwa in transluzenter oder opaker Form als Kochflächen oder Kochgeschirr und in transparenter Form als Brandschutzglas, Kaminsichtscheiben, Kochgeschirr oder Fenster für Pyrolyseherde eingesetzt. Inbesondere für die Anwendung als Kochflächen ist ein niedriger Ausdehnungskoeffizient kleiner als 1,5 · 10⁻⁶/K erforderlich und ein Ausdehnungskoeffizient von 0 · 10⁻⁶/K wird bei der Herstellung bevorzugt angestrebt.

Für bestimmte Anwendungen sind ferner Verbundbauteile erwünscht, die aus einem ersten Bauteil aus Glaskeramik und aus einem zweiten Bauteil aus einem Metall bestehen. Das GLaskeramikbauteil besitzt beispielsweise die notwendige Präzision, Formtreue und Temperaturstabilität, während das zweite Bauteil aus Metall notwendig ist, um eine präzise Halterung des Verbundbauteils und eine stabile Verbindungstechnik zu gewährleisten.

Bei der Herstellung von Verbundbauteilen aus Keramik oder Glaskeramik und aus Metall besteht das Hauptproblem meist in den Unterschieden zwischen den thermischen AusdehnungskoeEfizienten, da Metalle tendenziell einen deutlich höheren thermischen Ausdehnungskoeffizienten als Keramiken oder Glaskeramiken besitzen.

Aus der GB-A-2 279 343 ist eine Lithiumaluminosilikat-Glaskeramik bekannt, deren thermischer Ausdehnungskoeffizient im Temperaturbereich von 50 bis 700 °C zwischen -1 x 10⁻⁶ K⁻¹ und +2 x 10⁻⁶ K⁻¹ liegt. Diese Glaskeramik enthält überwiegend Hochquarz-Mischkristalle, wodurch der Ausdehnungskoeffizient vorzugsweise in der Nähe von 0 eingestellt ist.

Diese Glaskeramik ist zwar grundsätzlich zur Verbindung mit Metallbauteilen geeignet, jedoch ist der Einsatzbereich dieser Glaskeramik auf max. etwa 600 °C beschränkt.

Aus der EP-A-1 146 018 ist ferner ein gefloatetes Flachglas bekannt, das in eine Glaskeramik mit Keatit-Mischkristallen umgewandelt werden kann, wobei der thermische Ausdehnungskoeffizient weniger als 1,5 x 10⁻⁶ K⁻¹ beträgt.

Ein solches gefloatetes Flachglas ist nur in Form ebener Glasplatten herstellbar und ist infolge des geringen thermischen Ausdehnungskoeffizienten, der unterhalb von 1,5 x 10⁻⁶ K⁻¹ liegt, nicht zur Herstellung von Verbundbauteilen mit Metallen geeignet, die starken Temperaturschwankungen ausgesetzt sind.

Aus der FR-A-2 749 579 ist ferner eine Sinterglaskeramik bekannt, die als Lithiumaluminosilikat-Glaskeramik ausgebildet ist und einen thermischen Ausdehnungskoeffizienten von -0,5 x 10⁻⁶/K bis 1,8 x 10⁻⁶/K im Bereich zwischen 20 °C und 700 °C aufweist. Hierbei werden die Bauteile aus keramisierbarem Glaspulver und/oder Glaskeramik-Pulver aus dem System Li₂O-Al₂O₃-SiO₂ dem Schlickerguss mittels poröser Formen zu einem Grünkörper geformt, getrocknet, ggf. bei Temperaturen bis 800 °C vorgetempert und anschließend glasiert und dann bis zum Erreichen der Sintertemperatur bis zu relativen Dichten von > 0,96 gesintert und keramisiert. Nach diesem Verfahren wird technische Keramik hergestellt, insbesondere kompliziert geformte, großvolumige und dünnwandige Hohlgefäße, insbesondere zur Verwendung als thermoschockbeständiges Kochgeschirr besonders geeignet.

Als Präzisionsbauteile sind derartige Bauteile allerdings nicht geeignet, da bei Einsatztemperaturen in der Größenordnung von 700 °C Dimensionsveränderungen auftreten, insbesondere bei Langzeitanwendungen.

Aus der DE-A-1 902 432 ist ein Verfahren zum Herstellen kompakter transparenter Glaskeramik-Formteile aus einer Lithiumaluminosilikat-Glaskeramik bekannt. Die Bauteile weisen im Temperaturbereich von -30 bis +70 °C einen thermischen Ausdehnungskoeffizienten von ± 1,5 x 10⁻⁷/K auf, wobei die kristalline Phase überwiegend aus Quarz-Mischkristallen besteht.

Auch derartige Bauteile weisen keine ausreichende Temperaturbeständigkeit auf und sind zur Herstellung von Verbundbauteilen mit Metallkomponenten nicht geeignet.

Schließlich ist aus der DE-A-199 39 787 eine weitere Lithiumaluminosilikat-Glaskeramik bekannt, die Hochquarz-Mischkristalle als überwiegende Kristallphase aufweist. Der thermische Ausdehnungskoeffizient ist nahe Null eingestellt.

Auch ein derartiges Bauteil ist nicht ausreichend temperaturbeständig für Hochtemperaturanwendungen und ist nicht zur Herstellung von Verbundbauteilen mit metallischen Werkstoffen geeignet.

Der Erfindung liegt somit die Aufgabe zugrunde, ein Bauteil anzugeben, das für Hochtemperaturanwendungen bei Temperaturen von 600 °C und darüber geeignet ist, das als Präzisionsbauteil besonders form- und temperaturstabil ist und das zur Herstellung von Verbundbauteilen mit metallischen Komponenten besonders geeignet ist.

Ferner soll ein Verfahren zur Herstellung eines derartigen Bauteils und eine vorteilhafte Verwendung eines solchen Bauteils angegeben werden.

Erfindungsgemäß wird diese Aufgabe durch eine Verwendung gemäß Anspruch 1 gelöst.

Die Aufgabe der Erfindung wird auf diese Weise vollkommen gelöst.

Ein Bauteil aus einer derartigen Keatit-Glaskeramik weist infolgedessen, dass diese praktisch ausschließlich aus der stabilen Keatit-Mischkristallphase besteht, und dass praktisch keine Hochquarz-Restphase mehr vorhanden ist, besonders vorteilhafte Eigenschaften auf und lässt sich so besonders vorteilhaft für gegossene Präzisionsbauteile in Form von Stages für die Mikrolithographie, Spiegel, Abstandhalter, Kalibrier-Körper, Reflektoren für Resonatoren von Lasern verwenden.

Insbesondere kann eine Verwendung bei Temperaturen deutlich oberhalb von 600 °C erfolgen, und zwar bis zu etwa 1000 °C bzw. kurzzeitig sogar noch darüber.

Ferner ergibt sich eine gute Strahlungsbeständigkeit (z.B. für Weltraumanwendungen). Auch ein z.B. bei der Glaskeramik Zerodur® bekannter Hysterese-Effekt tritt hierbei nicht auf.

Da die Verwendung ein massives Gussbauteil umfasst, wird eine erhöhte Formstabilität und Temperaturstabilität auch oberhalb von 600 °C selbst bei Langzeitanwendungen gewährleistet, da Nachsintereffekte, die bei Sinterbauteilen auftreten können, vermieden werden. Es ergeben sich besondere Vorteile für Hochtemperaturanwendungen, bei denen es auf eine Langzeitstabilität auch bei hohen Temperaturen ankommt.

Es hat sich gezeigt, dass sich bei der Verwendung von Glaskeramiken insbesondere mit einem P₂O₅-Anteil im Ausgangsglas zwischen 3% und 15% nach der nahezu vollständigen Umwandlung in die Keatitphase deutlich höhere Ausdehnungskoeffizierten zwischen 1,5 · 10⁻⁶/K und 10⁻⁶/K ergeben. Die Feineinstellung des Ausdehnungskoeffizienten kann dabei sowohl über den P₂O₅-Anteil, als auch über den Anteil der Keatitphase geschehen.

Infolge des höheren thermischen Ausdehnungskoeffizienten, der im Bereich zwischen etwa 1,5 · 10⁻⁶/K und 3 · 10⁻⁶/K, meist jedoch bei etwa 2,0 · 10⁻⁶/K liegt, ergibt sich auch eine vorteilhafte Kombination mit Bauteilen aus Legierungen mit niedrigem thermischen Ausdehnungskoeffizienten wie z.B. Irvar® zu Verbundbauteilen. Hierbei lassen sich zwischen etwa 0 °C und 250 °C Unterschiede zwischen den thermischen Ausdehnungskoeffizienten von höchstens 1 · 10⁻⁶/K, vorzugsweise höchstens 0,5 · 10⁻⁶/K, insbesondere höchstens 0,1 · 10⁻⁶/K erzielen. Dadurch wird in diesem Temperaturbereich die Verbindungstechnik deutlich vereinfacht.

Die erfindungsgemäße Verwendung erlaubt ferner eine gute Langzeitstabilität und eine hohe Resistenz gegen chemische Umwelteinflüsse.

Erfindungsgemäß verwendete Keatit-Glaskeramikbauteilkomponenten lassen sich mit den folgenden Schritten herstellen:
- Gießen eines Lithiumaluminosilicat-Ausgangsglases in eine Form,
- Tempern zur Keimbildung bei einer Keimbildungstemperatur von etwa 600 bis 900 °C,
- Tempern zur Herstellung einer Keatit-Glaskeramik bei einer Keatit-Bildungstemperatur von etwa 800 bis 1300 °C, bis die kristalline Phase weitgehend vollständig in Keatit-Mischkristalle umgesetzt ist,
- Abkühlen des so hergestellten Bauteils auf Raumtenperatur.

Es besteht hierbei grundsätzlich die Möglichkeit, nach dem Tempern bei Keimbildungstemperatur zunächst ein Tempern zur Kristallisation bei einer höheren Kristallisationstemperatur auszuführen und erst danach eine weitere Temperaturerhöhung durchzuführen, um die zunächst gebildete Hochquarz-Mischkristallphase möglichst vollständig in Keatit-Mischcristalle umzuwandeln.

Nach dem Gießen des Ausgangsglases oder nach einem Tempern zur Keimbildung oder Kristallisation kann der so gebildete Körper im noch transparenten Zustand zunächst auf seine innere Qualität (Blasen, Einschlüsse, Inhomogenitäten, Schlieren und dergleichen) geprüft werden, bevor die Umwandlung in einen opaken Körper durch ein weiteres Tempern erfolgt.

Es kann auch zunächst durch Tempern bei Keimbildungstemperatur und nachfolgendes Tempern bei Kristallisationstemperatur eine Glaskeramik erzeugt werden, die Hochquarz-Mischkristalle als überwiegende Kristallphase enthält. So kann z.B. aus dem Ausgangsglas zur Herstellung einer Zerodur®-Glaskeramik zunächst die Zerodur®-Glaskeramik mit überwiegender Hochquarz-Mischkristallphase erzeugt werden, die eine Ausdehnungskoeffizienten nahe 0 besitzt. Durch ein anschließendes Aufheizen und Tempern auf die höhere Keatit-Bildungstemperatur können die zuvor gebildeten Hochquarz-Mischkristalle weitgehend vollständig in Keatit-Mischkristalle umgewandelt werden.

Alternativ hierzu kann auch ohne eine Zwischenabkühlung gearbeitet werden oder nach dem Tempern zur Keimbildung bei einer niedrigeren Temperatur im Bereich von etwa 650 bis 850°C sofort auf die höhere notwendige Temperatur zur Keatit-Bildung im Bereich von etwa 800 bis 1300°C aufgeheizt werden.

Auch eine dreistufige Prozessführung durch Tempern zunächst bei Keimbildungstemperatur im Bereich von etwa 650 bis 850°C, mit einem nachfolgenden Tempern bei Kristallisationstemperatur im Bereich von etwa 750 bis 900°C (zur Ausbildung der Hochquarz-Mischkristallphase) und ein nachfolgendes Tempern bei Keatit-Bildungstemperatur im Bereich zwischen etwa 850 und 1300°C zur Umwandlung der Hochquarz-Mischkristalle in Keatit-Mischkristalle ist möglich.

Das Tempern zur Keatit-Bildung erfolgt vorzugsweise bei mindestens 900 °C, vorzugsweise bei mindestens 1000 °C über mindestens eine Stunde, insbesondere über mindestens zwei Stunden, besonders bevorzugt über einen Zeitraum von mindestens drei bis vier Stunden.

Bei noch höherer Temperatur kann die Verweildauer entsprechend verkürzt werden.

Dabei wird die Temperung vorzugsweise bei ausreichender Temperatur über eine ausreichende Zeitdauer durchgeführt, bis eine weitgehende Umwandlung der nicht ausreichend stabilen Hochquarz-Mischkristallphase in die stabile Keatit-Mischkristallphase erfolgt ist. Allenfalls kann dann noch eine Glasrestphase vorhanden sein, in der die in den Hochquarz-Mischkristallen nicht löslichen Bestandteile, wie etwa Na₂O und Erdalkalioxide wie CaO, SrO, BaO angereichert sind. Vorzugsweise ist eine etwaige Restglasphase jedoch lediglich in Form von Einschlüssen vorhanden, die von Keatit-Mischkristallen umschlossen sind.

Das Material enthält nach Abschluss der Wärmebehandlung in der Regel mindestens 90 Vol.-% an Keatit (Anteil am Gesamtvolumen). Durch eine derartige Struktur wird die eine hohe Formstabilität und Temperaturstabilität in einem Bereich von 550 °C bis zu etwa 1000 °C gewährleistet. Ist noch ein größerer Anteil an Hochquarz-Mischkristallphase oder glasiger Restphase in Gesamtkörper vorhanden, so kann die Form- und Temperaturstabilität bei Temperaturen oberhalb von 600 °C oder bei höheren Temperaturen ggf. beeinträchtigt sein.

Als Ausgangsglas zur Herstellung der verwendeten Keatit-Glaskeramikbauteilkomponente wird vorzugsweise ein Glas verwendet, das folgende Bestandteile enthält (in Gew.-%)

| | |
|---|---|
| SiO₂: | 50-75 |
| Al₂O₃: | 17-30 |
| Li₂O: | 2-8 |
| B₂O₃: | 0-5 |
| P₂O₅: | 0-15 |
| SnO₂+ZrO₂+TiO₂: | 0,1-7 |
| Na₂O+K₂O+CS₂O: | 0-6 |
| CaO+MgO+SrO+BaO+ZnO: | 0-8 |
| Läutermittel wie Sb₂O₃, As₂O₃, SnO₂, | |
| CeO₂, Sulfat- oder Chloridverbindungen: | 0-3 |
| färbende Oxide wie V₂O₅, Cr₂O₃, MnO, Fe₂O₃, CoO, NiO und sonstige Oxide: | 0-5. |

Hierbei wird bevorzugt als Ausgangsglas ein Glas verwendet, das folgende Bestandteile enthält (in Gew.-%):

| | |
|---|---|
| SiO₂: | 55-70 |
| Al₂O₃: | 19-25 |
| Li₂O: | 2,5-4,5 |
| B₂O₃: | 0-1 |
| P₂O₅: | 3-8 |
| SnO₂+ZrO₂+TiO₂: | 0,5-5 |
| Na₂O+K₂O+CS₂O: | 0,1-3 |
| CaO+MgO+SrO+BaO+ZnO: 0-5 | |
| Läutermittel wie Sb₂O₃, As₂O₃, SnO₂, CeO₂, Sulfat- oder Chloridverbindungen: | 0-2 |
| färbende Oxide wie V₂O₅, Cr₂O₃, MnO, Fe₂O₃, CoO, NiO und sonstige Oxide: | 0-2. |

Mit einem derartigen Lithiumaluminosilicat-Ausgangsglas lässt sich die gewünschte überwiegende Ausbildung einer Keatit-Phase im Keatit-Glaskeramikbauteil erzielen. Siliciumoxid, Aluminiumoxid und Lithiumoxid sind in den angegebenen Bereichen notwendig, um eine leichte Kristallisation und eine niedrige thermische Ausdehnung zu gewährleisten. Diese Komponenten sind Bestandteile der Keatit-Mischkristalle. Der Al₂O₃-Gehalt sollte möglichst größer als 19,8 Gew.-% sein, da sonst unerwünscht hohe SiO₂-Gehalte von verbleibenden Hochquarz-Mischkristallen begünstigt werden. Dagegen kann ein zu hoher Al₂O₃-Gehalt zu unerwünschter Entglasung von Mullit führen. Boroxid wird vorzugsweise gar nicht oder nur in geringen Mengen zugesetzt, da höhere Boroxid-Gehalte nachteilig für die Kristallisation sind. Als weitere Komponente kann P₂O₅ zugesetzt werden, in Gehalten von 0 bis 15 Gew.-%, bevorzugt zwischen 3 und 8 Gew.-%. Notwendig ist der Zusatz von ZrO₂ oder TiO₂ als Keimbildner zur Kristallisation. Alternativ oder zusätzlich kann hierbei auch SnO₂ zugesetzt werden. Die Zugabe der Alkalien Na₂O, K₂O, Cs₂O, sowie der Erdalkalien CaO, SrO, BaO verbessert die Schmelzbarkeit und das Entglasungsverhalten des Glases bei der Herstellung. In ähnlicher Weise wirken MgO und ZnO. Die Glaskeramik kann bei der Herstellung durch Zusatz üblicher Läutermittel, wie z.B. As₂O₃, Sb₂O₃, SnO₂, CeO₂, Sulfat oder Chloridverbindungen, wie etwa NaCl, hergestellt werden. Weiter können färbende Oxide, wie etwa V₂O₅, Cr₂O₃, MnO, Fe₂O₃, CoO, NiO und sonstige Oxide, in den angegebenen Bereichen enthalten sein.

Bevorzugt kann eine Zusammensetzung verwendet werden, die der bekannten Zusammensetzung von Zerodur® oder Zerodur-M® entspricht, die von der Anmelderin vertrieben wird. Darüber hinaus ist die Verwendung von anderen artverwandten Glaskeramiken wie Ceran®, Robax®, Clearceram®, Neoceram®, Astrositall® als Ausgangsglas möglich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines bevorzugter Ausführungsbeispiels.

Erfindungsgemäß wird ein Bauteil aus einer speziellen Keatit-Glaskeramik verwendet, die überwiegend aus Keatit-Mischkristallen besteht.

Ein solches Bauteil aus einer Keatit-Glaskeramikkomponente wird aus einem Ausgangsglas durch Gießen hergestellt, das durch eine Wärmebehandlung in eine Keatit-Glaskeramik mit überwiegender Keatit-Mischkristallphase umgewandelt wird.

Der resultierende Ausdehnungskoeffizient der Keatit-Glaskeramik zwischen 20°C und 700°C liegt im Bereich von etwa 1,5 · 10⁻⁶/K bis 3 · 10⁻⁶/K, bevorzugt jedoch bei etwa 2,0 · 10⁻⁶/K.

Es lassen sich hochstabile Bauteile auch in großen Dimensionen erzielen. So sind etwa Durchmesser von acht Metern bei 20 cm Dicke oder mehr erreichbar.

Erfindungsgemäß verwendete Glaskeramik-Bauteile können unmittelbar als z.B. besonders temperaturbeständige oder strahlungsbeständige Präzisionsbauteile etwa für Satellitenandendungen genutzt werden oder aber mit metallischen Bauteilen als Legierungen mit niedrigem thermischem Ausdehnungskoeffizienten (wie etwa Invar36®, wobei es sich um FeNi36 bzw. die Eisen-Nickel-Legierung 1.3912 handelt) zu Verbundbauteilen kombiniert werden. Der thermische Ausdehnungskoeffizient von Invar36® im Bereich zwischen 20 °C und 90 °C liegt bei 1,7 bis 2,0 ·10⁻⁶/K, wodurch sich eine besonders gute Anpassung an die erfindungsgemäße Keatit-Glaskeramik ergibt.

Hierbei kann die Verbindung mit dem metallischen Bauteil als Klemmverbindung, Schraubverbindung, formschlüssige Verbindung, reibschlüssige Verbindung oder ggf. als Schrumpfverbindung oder Klebeverbindung hergestellt werden.

### Beispiel

Es wird ein Ausgangsglas aus folgenden Bestandteilen (in Gew.-%) erschmolzen:

| | |
|---|---|
| SiO₂ | 55,5 |
| Al₂O₃ | 25,3 |
| P₂O₅ | 7,90 |
| Li₂O | 3,70 |
| Na₂O | 0,50 |
| MgO | 1,00 |
| ZnO | 1,40 |
| TiO₂ | 2,30 |
| ZrO₂ | 1,90 |
| As₂O₃ | 0,50 |

Dies entspricht einer möglichen Zusammensetzung der von der Anmelderin unter der Marke Zerodur® vertriebenen Glaskeramik. Das so hergestellte Ausgangsglas wird nach der Läuterung zu einem Rohglasblock gegossen und dann mit einem Temperaturprogramm durch kontrollierte Kristallisation keramisiert. Hierzu erfolgt beispielsweise zunächst mit 0,1 K/min eine Aufheizung auf 730°C, ein Halten über eine Dauer von 24 Stunden bei 730°C, dann ein Aufheizen mit 0,1 K/min bis auf 850°C, ein weiteres Halten über 48 Stunden bei 850°C und dann ein langsames Abkühlen auf Raumtemperatur mit 0,1 K/min.

Je nach der Größe des Glaskeramikblockes ist hierbei das Temperaturprogramm entsprechend anzupassen, um eine hochwertige, rissfreie Glaskeramik mit einer Hochquarz-Mischkristallphase im gewünschten Bereich zu erhalten.

Aus einem so hergestellten Glaskeramikblock mit überwiegender Hochquarz-Kristallphase wird ein geeignetes Rohteil herausgetrennt, an seiner Oberfläche mechanisch bearbeitet und auf seine Qualität geprüft.

Dann wird das Teil erneut z.B. mit 4 K/min auf 1000°C aufgeheizt und über eine Zeitdauer von vier Stunden gehalten, bevor wieder eine gesteuerte Abkühlung auf Raumtemperatur mit 4 K/min erfolgt.

Ein so hergestelltes Keatit-Glaskeramikbauteil ist vollständig opak und weist überwiegend die stabile Keatit-Mischkristallphase auf. Auch ist nur noch ein geringer glasiger Restbestandteil vorhanden. Das so hergestellte Bauteil kann mechanisch bearbeitet werden, z.B. gesägt, geschliffen, geläppt oder poliert werden, um die notwendige Form und Oberflächenbeschaffenheit zu erhalten.

Ein so hergestelltes Bauteil kann z.B. mit einem Bauteil aus Invar36® etwa durch eine formschlüssige Verbindung kombiniert werden, um z.B. ein Verbundteil herzustellen, das als Präzisions-Reflektor im Resonator eines Hochleistungs-Lasersystems einsetzbar ist. Hierbei werden neben der hohen Temperaturstabilität des Materials auch die guten Remissionseigenschaften vorteilhaft genutzt.

## Patentansprüche

1. Verwendung einer Lithiumaluminosilikat-Glaskeramik, deren kristalliner Anteil zu mindestens 90 Vol.-% aus Keatit-Mischkristallen besteht, zur Herstellung von gegossenen Präzisionsbauteilen in Form von Stages für d e Mikrolithographie, Spiegeln, Abstandshaltern, Kalibrierkörpern, Reflektoren für Resonatoren von Lasern, die bis zu mindestens 800 °C temperaturbeständig, vorzugsweise bis zu 1000 °C temperaturbeständig sind und einen niedrigen thermischen Ausdehnungskoeffizienten im Bereich von 1,5 · 10-⁶/K bis 3 · 10⁻⁶/K zwischen 20 °C und 700 °C aufweisen.

2. Verwendung einer Lithiumaluminosilikat-Glaskeramik nach Anspruch 1 als strahlungsresistentes Bauteil Bauteil mit einem thermische Ausdehnungskoeffizienten zwischen 1,5 · 10⁻⁶/K und 3 · 10⁻⁶/K.

3. Verwendung nach Anspruch 1, bei dem etwaige Restglasanteile als Einschlüsse in einem überwiegend aus Keatit-Mischkristallen bestehenden Gefüge eingeschlossen sind.

4. Verwendung nach Anspruch 1, 2 oder 3, bei dem die Lithiumaluminosilikat-Glaskeramik folgende Bestandteile (in Gew.-%) aufweist:
| | |
|---|---|
| SiO₂: | 50-75 |
| Al₂O₃: | 17-30 |
| Li₂O: | 2-8 |
| B₂O₃: | 0-5 |
| P₂O₅: | 0-15 |
| SnO₂+ZrO₂+TiO₂: | 0,1-7 |
| Na₂O+K₂O+Cs₂O: | 0-6 |
| CaO+MgO+SrO+BaO+ZnO: | 0-8 |
| Läutermittel wie | |
| Sb₂O₃, As₂O₃, SnO₂, CeO₂, Sulfat- oder Chloridverbindungen: | 0-3 |
| färbende Oxide wie V₂O₅, Cr₂O₃, MnO, Fe₂O₃, CoO, NiO und sonstige Oxide: | 0-5. |

5. Verwendung nach Anspruch 4, bei dem die Lithiumaluminosilikat-Glaskeramik folgende Bestandteile (in Gew.-%) aufweist:
| | |
|---|---|
| SiO₂: | 55-70% |
| Al₂O₃: | 1.9-25% |
| Li₂O: | 2,5-4,5 |
| B₂O₃: | 0-1 |
| P₂O₅: | 3 - 8 |
| SnO₂+ZrO₂+TiO₂: | 0,5-5 |
| Na₂O+K₂O+Cs₂O: | 0,1-3 |
| CaO+MgO+SrO+BaO+ZnO: | 0-5 |
| Läutermittel wie Sb₂O₃, As₂O₃, SnO₂, CeO₂, Sulfat- oder Chloridverbindungen: | 0-2 |
| färbende Oxide wie V₂O₅, Cr₂O₃, MnO, Fe₂O₃, CoO, NiO und sonstige Oxide: | 0-2. |

## Claims

1. Use of a lithium-aluminosilicate glass ceramic, the crystalline part of which consists of at least 90 vol.-% of keatite mixed crystals for the preparation of mechanically fine machined optical or mechanical high-precision parts configured as stages for micro-lithography, as mirrors, spacers, calibrating bodies, reflectors for laser resonators, which is temperature resistant up to at least 800 °C, preferably to at least 1000 °C, and has a low coefficient of thermal expansion in the range of 1.5 to 3 x 10⁻⁶/K between 20 °C and 700 °C.

2. The use of a lithium-aluminosilicate glass ceramic according to claim 1 as a radiation resistant component having a coefficient of thermal expansion between 1.5 x 10⁻⁶/K and 3 x 10⁻⁶/K.

3. The use of claim 1, wherein any residual glassy parts are dispersed as inclusions within a structure consisting predominantly of keatite mixed crystals.

4. The use of claim 1, 2 or 3, wherein the lithium-aluminosilicate glass ceramic comprises the following components (in wt.-%):
| | |
|---|---|
| SiO₂: | 50-75 |
| Al₂O₃: | 17-30 |
| Li₂O: | 2-8 |
| B₂O₃: | 0-5 |
| P₂O₅: | 0-15 |
| SnO₂+ZrO₂+TiO₂: | 0.1-7 |
| Na₂O+K₂O+Cs₂O: | 0-6 |
| CaO+MgO+SrO+BaO+ZnO: | 0-8 |
| refining agents such as | |
| Sb₂O₃, As₂O₃, SnO₂, CeO₂, sulfate or chloride compounds: | 0-3 |
| coloring oxides such as V₂O₅, Cr₂O₃, MnO, Fe₂O₃, CoO, NiO and other oxides: | 0-5. |

5. The use of claim 4, wherein the lithium-aluminosilicate glass ceramic comprises the following components (in wt.-%):
| | |
|---|---|
| SiO₂: | 55-70% |
| Al₂O₃: | 19-25% |
| Li₂O: | 2.5-4.5 |
| B₂O₃: | 0-1 |
| P₂O₅: | 3 - 8 |
| SnO₂+ZrO₂+TiO₂: | 0.5-5 |
| Na₂O+K₂O+Cs₂O: | 0.1-3 |
| CaO+MgO+SiO+BaO+ZnO: | 0-5 |
| refining agents such as Sb₂O₃, As₂O₃, SnO₂, CeO₂, sulfate or chloride compounds: | 0-2 |
| coloring oxides such as V₂O₅, Cr₂O₃, MnO, Fe₂O₃, CoO, NiO and other oxides: | 0-2. |

## Revendications

1. Utilisation d'une céramique de verre d'aluminosilicate de lithium, dont la proportion cristalline est constituée à raison d'au moins 90% en volume de cristaux mixtes de kéatite, pour la production de pièces de précision coulées sous forme de masques pour la microlithographie, de miroirs, d'écarteurs, de corps de calibrage, de réflecteurs pour les résonateurs de lasers, qui résistent à la température jusqu'au moins 800°C, de préférence jusqu'à 1000°C et qui présentent un faible coefficient de dilatation thermique dans la plage de 1,5.10⁻⁶/K à 3.10⁻⁶/K entre 20°C et 700°C.

2. Utilisation d'une céramique de verre d'aluminosilicate de lithium selon la revendication 1 comme pièce résistant au rayonnement avec un coefficient de dilatation thermique entre 1,5.10⁻⁶/K et 3.10⁻⁶/K.

3. Utilisation selon la revendication 1, dans laquelle d'éventuelles proportions résiduelles de verre sont contenues sous forme d'inclusions dans une structure principalement constituée de cristaux mixtes de kéatite.

4. Utilisation selon la revendication 1, 2 ou 3, dans laquelle la céramique de verre d'aluminosilicate de lithium présente les constituants suivants (en % en poids) :
| | |
|---|---|
| SiO₂ : | 50-75 |
| Al₂O₃ : | 17-30 |
| Li₂O : | 2-8 |
| B₂O₃ : | 0-5 |
| P₂O₅ : | 0-15 |
| SnO₂ + ZrO₂ + TiO₂ | 0,1-7 |
| Na₂O + K₂O + Cs₂O : | 0-6 |
| CaO + MgO + SrO + BaO + ZnO : | 0-8 |
| Agents d'affinage tels que Sb₂O₃, As₂O₃, SnO₂, CeO₂, composés de sulfate ou de chlorure : | 0-3 |
| Oxydes colorants tels que V₂O₅, Cr₂O₃, MnO, Fe₂O₃, CoO, NiO et autres oxydes : | 0-5. |

5. Utilisation selon la revendication 4, dans laquelle la céramique de verre d'aluminosilicate de lithium présente les constituants suivants (en % en poids) :
| | |
|---|---|
| SiO₂ : | 55-70% |
| Al₂O₃ : | 19-25% |
| Li₂O : | 2,5-4,5 |
| S₂O₃ : | 0-1 |
| P₂O₅ : | 3-8 |
| SnO₂ + ZrO₂ + TiO₂ : | 0,5-5 |
| Na₂O + K₂O + Cs₂O : | 0, 1-3 |
| CaO + MgO + SrO + BaO + ZnO : | 0-5 |
| Agents d'affinage tels que Sb₂O₃, As₂O₃, SnO₂, CeO₂, composés de sulfate ou de chlorure : | 0-2 |
| Oxydes colorants tels que V₂O₅, Cr₂O₃, MnO, Fe₂O₃, CoO, NiO et autres oxydes : | 0-2. |
